(19)

Europäisches
Patentamt

European
Patent Office

Office européen
des brevets

(11) **EP 4 687 122 A1**

(12) **EUROPEAN PATENT APPLICATION**

(43) Date of publication:
**04.02.2026 Bulletin 2026/06**

(21) Application number: **25192056.7**

(22) Date of filing: **28.07.2025**

(51) International Patent Classification (IPC):
**G06V 20/64** *(2022.01)* **G06V 20/58** *(2022.01)*
**G06V 10/82** *(2022.01)*

(52) Cooperative Patent Classification (CPC):
**G06V 20/58; G06V 10/82; G06V 20/647**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.07.2024 CN 202411036795**

(71) Applicant: **Robert Bosch GmbH
70442 Stuttgart (DE)**

(72) Inventors:
• **HE, Zhuolin
Shanghai (CN)**
• **WANG, Wenfu
Shanghai (CN)**
• **QIU, Xuchong
Shanghai (CN)**
• **LU, Lvjian
Shanghai (CN)**
• **LI, Xinrun
Shanghai, 200335 (CN)**

(54) **METHODS AND RELATED APPARATUSES FOR ADJUSTING AN OBJECT DETECTION
MODEL**

(57)     The present disclosure related to methods and related apparatuses for adjusting an object detection model. The method comprises determining a first object detection result based on three-dimensional point cloud data using a first object detection model, the first object detection result comprising location information of a first object candidate box. The method further comprises determining, from the first object candidate box, a first object box, the category of objects contained in the first object box being a category unknown to the second object detection model. The method further comprises determining a second object detection result comprising location information of a second object box and a category of objects contained in the second object box using a second object detection model based on the bird's-eye view features associated with the three-dimensional point cloud data and adjusting the second object detection model based on the second object box and the first object box. In this way, the object detection model can be adjusted using the object boxes determined by other object detection models, thereby improving the model's detection performance for objects of unknown categories.

FIG. 3

**Description**

Technical Field

Examples of the present disclosure relate generally to the field of computer vision, and in particular to methods and related apparatuses for adjusting object detection models.

Background

With the development of intelligent vehicles, autonomous driving technology has gradually become valued by users. Three-dimensional object detection is a critical step in autonomous driving technology. This refers to the acquisition of three-dimensional information in a road environment by a sensor to identify the locations of vehicles, pedestrians, traffic signs, and other objects in the environment in three-dimensional space, thereby achieving awareness and understanding of the surrounding environment. That is, accurately identifying various types of objects and their locations in three-dimensional space is the basis for autonomous vehicles to perceive the surrounding environment and is essential for safe autonomous driving.

Summary of the Invention

Examples of the present disclosure provide methods and related apparatuses for adjusting object detection models.

In a first aspect of the present disclosure, a method for adjusting object detection models is provided. The method comprises determining a first object detection result based on three-dimensional point cloud data using a first object detection model, the first detection result comprising location information of a first object candidate box. The method further comprises determining, from the first object candidate box, a first object box, wherein the category of objects contained in the first object box is a category unknown to the second object detection model. The method further comprises determining a second object detection result comprising location information of a second object box and a category of objects contained in the second object box using a second object detection model based on the bird's-eye view features associated with the three-dimensional point cloud data. Further, the method further comprises adjusting the second object detection model based on the second object box and the first object box.

In a second aspect of the present disclosure, an apparatus for adjusting an object detection model is provided. The apparatus comprises a first object detection result determination unit configured to determine a first object detection result based on three-dimensional point cloud data using a first object detection model, the first object detection result comprising location information of a first object candidate box. The apparatus further comprises a first object box determination unit configured to determine a first object box from a first object candidate box, wherein the category of objects contained in the first object box is a category unknown to the second object detection model. The apparatus further comprises a second object detection result determination unit configured to determine a second object detection result comprising location information of a second object box and a category of objects contained in the second object box using a second object detection model based on the bird's-eye view features associated with the three-dimensional point cloud data. The apparatus further comprises a model adjustment unit configured to adjust the second object detection model based on the second object box and the first object box.

According to a third aspect of the present disclosure, an electronic device is provided. The device comprises one or more processors; and a memory for storing one or more programs, the one or more programs, when executed by the one or more processors, causing the one or more processors to implement a method for adjusting a three-dimensional object detection model,

In a fourth aspect of the present disclosure, a computer-readable storage medium is provided. The computer-readable storage medium has computer-executable instructions stored thereon, wherein the computer-executable instructions are executed by a processor to implement the method provided according to the first aspect of the present disclosure.

According to a fifth aspect of the present disclosure, a computer program product is provided, the computer program product being tangibly stored on a computer-readable medium and comprising computer-executable instructions, the computer-executable instructions, when executed, implementing the method according to the first aspect of the present disclosure.

It shall be understood that the content described in the Summary of the Invention is not intended to limit key or important features of the examples of the present disclosure, nor is it intended to limit the scope of the present disclosure. Other features of the present disclosure will become readily understood by the following description.

Brief Description of the Drawings

Above and other features, advantages and aspects of various examples of the present disclosure will become more apparent in combination with the accompanying drawings and with reference to the following detailed description. In the accompanying drawings, like or similar accompanying drawings designate like or similar elements, wherein:

FIG. 1 shows a schematic diagram of an example environment in which a plurality of examples according to the present disclosure may be implemented;
FIG. 2 shows a schematic diagram of a training process for a three-dimensional object detection model according to some examples of the present disclosure;
FIG. 3 shows a flow chart of a method for adjusting a three-dimensional object detection model according to some examples of the present disclosure;
FIG. 4 shows a schematic diagram of a process for training a foreground object detection network according to some examples of the present disclosure;
FIG. 5 shows a schematic diagram of a process for determining an object box according to some examples of the present disclosure;
FIG. 6 shows a block diagram of an apparatus for adjusting a three-dimensional object detection model according to some examples of the present disclosure; and
FIG. 7 shows a schematic block diagram of an example apparatus according to some examples of the present disclosure.

In all figures, like or similar reference signs represent like or similar elements.

Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on." The term "one example" or "this example" should be understood as "at least one example." The terms "first," "second," etc. may refer to different or the same object. Other explicit and implicit definitions may be included below.

As described above, three-dimensional object detection refers to processing input point cloud data and/or images using a three-dimensional object detection model and outputting the objects contained therein (e.g., the category of the object and the location of the object). In order for the three-dimensional object detection model to accurately identify the location and category of objects in the surrounding environment so that the autonomous driving system makes correct driving decisions, it is necessary to train the three-dimensional object detection model and continuously optimize the detection accuracy of the three-dimensional object detection model.

The training of relevant three-dimensional object detection models is typically conducted using closed data sets. For example, a three-dimensional object detection model is used to identify object instances of a set of predefined known categories, during both training and testing. Such a three-dimensional object detection model after training is complete does not have the ability to identify unknown objects (or, when identifying an unknown object, cannot accurately identify the location and category of that object). The unknown objects may be unforeseen new categories of objects caused by dynamic changes in real-world scenarios. For example, pedestrians or their behavior in real-world scenarios tends to be more diverse and unpredictable, or as society progresses, the appearance of new types of vehicles or changes in roads (construction areas, temporary traffic signs, road closures, etc.) will bring about great challenges for object detection models.

To address at least the above problems, examples of the present disclosure provide a method for adjusting an object detection model. The method comprises determining a first object detection result based on three-dimensional point cloud data using a first object detection model, the first object detection result comprising location information of a first object candidate box. The method further comprises determining, from the first object candidate box, a first object box, the category of objects contained in the first object box being a category unknown to the second object detection model. The method further comprises determining a second object detection result comprising location information of a second object box and a category of objects contained in the second object box using a second object detection model based on the bird's-eye view features associated with the three-dimensional point cloud data. Further, the method further comprises adjusting the second object detection model based on the second object box and the first object box.

In this way, it is possible to combine other object detection models to filter out object boxes of unknown categories of objects and combine the object boxes of objects of unknown categories relative to the object detection model with the object boxes predicted by the three-dimensional detection model, providing strong support for model training. The object detection model is adjusted according to the differences between the two to improve the model's detection performance for objects of unknown categories. At the same time, since the type of object detection model is not limited in the training process, the adjusted object detection model also has good scalability and versatility and can be adapted to the detection needs of different scenarios and object categories.

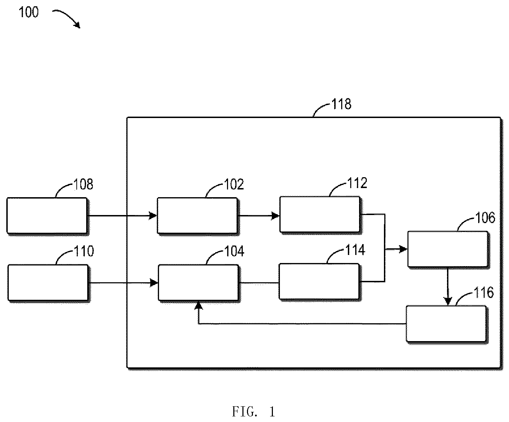

The basic principles and a plurality of exemplary examples of the present disclosure will be described in detail below with reference to the accompanying drawings. FIG. 1 shows a schematic diagram of an example 100 in which the device and/or method according to examples of the present disclosure may be implemented. FIG. 1 may include a first object detection model (e.g., a foreground object detection model) 102, a second object detection model (e.g., a three-dimensional object detection model) 104, and a pseudo-label selection model 106. The types and numbers of models, data transmission processes, arrangements, etc. shown in FIG. 1 are merely exemplary, and example 100 may include models, data transmission processes, various additional elements, etc. of different numbers and arranged in different ways. It should be understood that the above examples are only used to illustrate the application of the three-dimensional object detection model 104. As the technology develops, the three-dimensional object detection model 104 may include various known or unknown applications in various fields and various aspects.

In the example environment 100, the foreground object detection model 102, the three-dimensional object detection model 104, and the pseudo-label selection model 106 may be installed in any electronic device 118 having processing computing resources or storage resources. For example, the electronic device 118 may have common capabilities such as receiving and sending data requests, real-time data analysis, local data storage, real-time network connection, etc. The electronic device 118 may generally include various types of devices. Examples of electronic devices 118 may include but are not limited to: desktop computers, laptop computers, smart phones, wearable devices, security equipment, smart manufacturing equipment, smart home equipment, Internet of Things devices, smart cars, drones, etc. The present disclosure does not impose any limitations on this.

According to examples of the present disclosure, the foreground object detection model 102 can process the input three-dimensional point cloud data 108 to determine the probability that objects present in different regions belong to the foreground and background, e.g., the foreground detection model 102 may be a region proposal network (RPN) or other general purpose target detection network. The foreground object detection model 102 inputs the three-dimensional point cloud data 108 or images of any scale into the foreground object detection model 102, which can output a series of two-dimensional rectangular candidate regions or three-dimensional cuboid regions. The probability of objects (foreground) being present in these candidate regions is relatively high. It can be understood that the foreground object detection model 102 can be a model pre-trained by training data. For example, the foreground object detection model 102 may be a neural network model that extracts and identifies foreground objects (i.e., objects moving or changing relative to the background) from images or video. It can be understood that the categories of foreground objects may be known or unknown.

In some examples of the present disclosure, the three-dimensional object detection model 104 is a machine learning-based model primarily used to identify objects in three-dimensional space and determine their locations and postures. The model typically uses deep learning techniques such as convolutional neural networks (CNNs) or recurrent neural networks (RNNs) to extract features from three-dimensional data and perform classification and regression.

As shown in FIG. 1, the three-dimensional point cloud data 108 is input into the foreground object detection model 102 and the image data 110 is input into the three-dimensional object detection model 104. The three-dimensional point cloud data 108 and the image data 110 may be acquired by different acquisition devices for the same environment at the same time. For example, the image data 110 and the three-dimensional point cloud data 108 may be temporally and spatially aligned (e.g., aligned in time and space) using a calibration method. The foreground object detection model 102 may generate an object candidate box 112 based on the input three-dimensional point cloud data 108. The object candidate box is likely to have objects (e.g., vehicles, pedestrians, obstacles, etc.). The three-dimensional object detection model 104 may generate a bird's-eye view (BEV) feature 114 based on the image data 110. The BEV feature 114 may be represented in the form of an attention response map. The attention response map refers to the image of the response of the BEV feature 114 under the attention mechanism. The response levels at different locations and regions in the attention response map are different. A region with a lower level of attention response may represent a higher likelihood of objects of an unknown category or no object being present at that region.

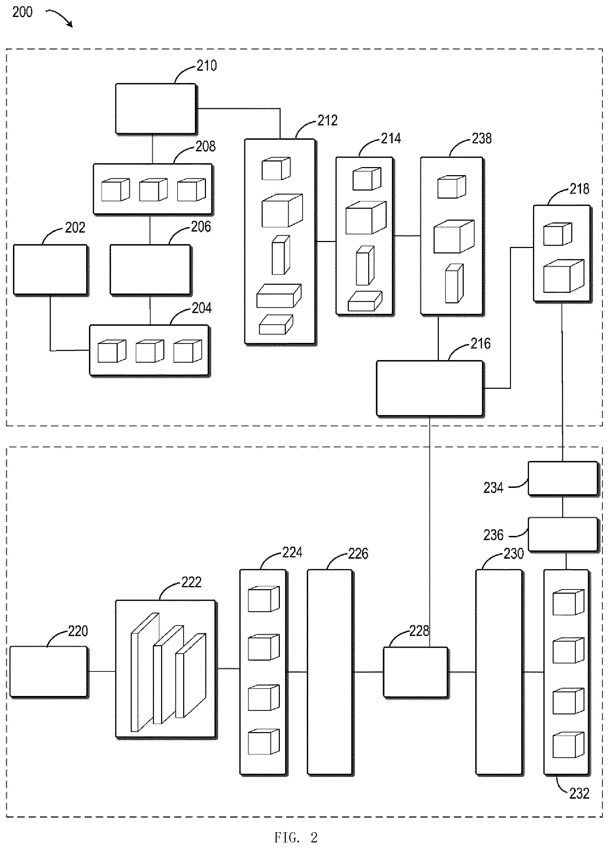

In some examples of the present disclosure, the object candidate box 112 may be input into the pseudo-label selection model 106, which outputs an object box 116 that meets the requirements. The category of objects contained in the object box 116 is an unknown category to the three-dimensional object detection model 104 (e.g., the "unknown" category). For example, meeting the requirements means that there is a high possibility that an object exists in the region corresponding to the object candidate box 112 and the category of the object is unknown to the three-dimensional object detection model 104. The object boxes corresponding to the objects of unknown categories that are most likely to be present can be filtered out by the pseudo-label selection model 106. The filtered object box 116 is input into the three-dimensional object detection model 104 to train the three-dimensional object detection model 104. For example, the three-dimensional object detection model 104 may determine object detection results based on BEV features, the object detection results including locations and categories of object boxes for the objects. Based on the detected object detection results and the filtered object box 116, a three-dimensional object detection model 104 is trained. An exemplary training process will be described in detail in connection with the description of FIG. 2.

FIG. 2 shows a schematic diagram for training a three-dimensional object detection model according to some examples of the present disclosure. As shown in FIG. 2, features of the three-dimensional point cloud data 202 and an initial query 204 of the foreground object detection network 206 may be obtained. The initial query may be a set of predefined rectangular boxes in the foreground object detection network 206, each having a different size and scale to cover objects of different sizes and shapes. The foreground object detection network 206 may generate a set of three-dimensional object queries 208 of fixed size based on an initial query 204 of the three-dimensional point cloud data 202. By performing binary classification and bounding box regression 210 on these three-dimensional object queries 208 (e.g., adjusting the location and size of the anchor box to better match the potential object), object candidate boxes 212 are obtained (the number of object candidate boxes 212 can be a plurality, and the sizes of different object candidate boxes 212 can differ). The object candidate boxes 212 may be, e.g., proposal boxes (3D region proposal). In some examples of the present disclosure, a foreground object detection network (e.g., a region proposal network) 206 may also output location information, category information, and an objectness score corresponding to the object candidate boxes 212.

As shown in FIG. 2, after the object candidate boxes 212 are determined, the object candidate boxes 212 may be filtered (GT filtering) using a ground truth (GT) (e.g., a known category ground truth) to determine a filtered second object candidate box 214. For example, the object candidate boxes 212 may be filtered according to known object categories in the training data used to train the foreground object detection network 206, and the object candidate boxes 212 of known object categories in the training data may be removed to determine the filtered second object candidate box 214. Here, GT refers to data that is actually labeled in the training process for the region generation network 206, e.g., accurate location and category information of objects known during the training process. It can be understood that, to further determine the accuracy of the object candidate boxes, the second object candidate box 214 may be filtered using the objectness score to determine a third object candidate box 238. For example, the third object candidate box 214 having a higher objectness score may be used as the third object candidate box 238. The objectness score can be determined based on the matching result between the second object candidate box 214 and the ground truth object box included in GT.

In some examples of the present disclosure, the three-dimensional object detection model comprises a feature extraction layer 222, an encoding layer 226, and a decoding layer 230. The image data 220 may be input into the feature extraction layer 222 (e.g., Backbone) and the feature extraction layer 222 determines an initial query 224 applicable to the image data 220. The encoding layer 226 may encode the initial query to determine the bird's-eye view feature 228 corresponding to the image data 220 at a plurality of viewing angles. Bird's-eye view features refer to feature representation from a bird's-eye view that includes spatial structure and semantic information of the image data 220 from a bird's-eye view. The encoding layer 226 is a network layer based on an attention mechanism, which can give different responses (such as attention response levels) to different regions in the image data 220. The decoding layer 230 may decode the bird's-eye view feature 228 to determine a three-dimensional candidate region 232 included in the image data 220. By classifying and regressing the bounding boxes of the three-dimensional candidate regions 232 , an object prediction box 232 is predicted, the object prediction box 232 including the category information and location information of the object.

This is because the bird's-eye view feature 228 contains different attention response levels at different locations or different regions. A region with a lower level of attention response may represent a higher likelihood of objects of an unknown category or no object being present at that region. Thus, the bird's-eye view feature 228 and the third object candidate box 238 obtained after filtering may be input into the pseudo-label selection model 216. The third object candidate box 238 is again filtered by the pseudo-label selection model 216 according to the bird's-eye view feature 228 to determine that the object box 218 includes the unknown object. That is, the object box 218 containing the unknown object may be determined through multiple filtering methods. By comparing the location information and category information of the object box 218 containing the unknown object with the category information and location information 236 of the object contained in the object prediction box 232, a classification loss function and a regression loss function 236 for adjusting the three-dimensional object detection model can be determined. The three-dimensional object detection model may be adjusted 234 according to the classification loss function and the regression loss function 236 to determine an adjusted three-dimensional object detection model.

It should be understood that using object boxes that only contain unknown objects after being filtered in various ways to assist in the training of a three-dimensional object detection model can enable the trained three-dimensional object detection model to have the ability to identify or detect unknown objects, thereby improving the detection accuracy and robustness of the three-dimensional object detection model.

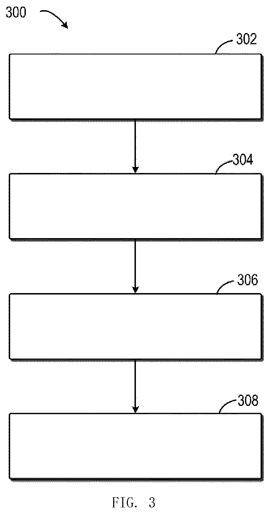

A schematic diagram in which the method and/or process according to examples of the present disclosure may be implemented is described above in connection with FIG. 1 and FIG. 2. A flowchart of a method 300 for adjusting a three-dimensional object detection model according to examples of the present disclosure will be described below in connection with FIG. 3. The method 300 for adjusting a three-dimensional object detection model according to examples of the present disclosure may be performed at an edge device having computational capabilities or at a cloud server, and the present disclosure does not limit this.

At block 302, the method 300 comprises determining a first object detection result based on three-dimensional point cloud data using a first object detection model (e.g., the foreground object detection model 102 shown in FIG. 1), the first object detection result comprising location information of a first object candidate box. The three-dimensional point cloud data may be collected by the point cloud collection device according to a preset frame rate. For example, the point cloud collection device may be a radar (e.g., a laser radar), and the collected three-dimensional point cloud data refers to a set of data points representing the surface shape of an object in three-dimensional space. Data points typically include three-dimensional coordinates (X, Y, Z) and other information (e.g., color, reflectivity, etc.). After the three-dimensional point cloud data is collected, the three-dimensional point cloud data may be labeled manually, semi-automatically, or automatically. That is, the three-dimensional point cloud data also includes labeling information. In some examples, a first object candidate box (e.g., object candidate box 238 shown in FIG. 2) corresponding to the three-dimensional point cloud data may be determined based on a machine learning algorithm or a deep learning algorithm. It should be understood that the first object candidate box refers to a candidate box that may contain a foreground object. The number of first object candidate boxes may be a plurality and the dimensions of the plurality of first object candidate boxes may differ.

At block 304, the method 300 further comprises determining, from the object candidate box, an object box, the category of objects contained in the object box being a category unknown to the three-dimensional object detection model. It can be understood that the object box filtered by the first object detection model can be used as a basis for adjusting the second object detection model. In some examples of the present disclosure, the first object candidate box may be filtered using labeling information of the three-dimensional point cloud data, or the first object candidate box may be filtered using similarities between multiple object candidate boxes to determine the corresponding object box.

At block 306, the method 300 comprises determining a second object detection result using a second object detection model (e.g., the three-dimensional object detection model 104 shown in FIG. 1) based on the bird's-eye view feature associated with the three-dimensional point cloud data, the second object detection result including location information and a category of an object prediction box. The bird's-eye view feature associated with the three-dimensional point cloud data may be the bird's-eye view feature obtained by performing coordinate transformation on the three-dimensional point cloud data. In some examples of the present disclosure, the bird's-eye view feature may also be obtained by merging image data at different viewing angles. Image data refers to image data acquired at the same time and at the same frame rate. For example, multiple image data may be acquired at different viewing angles using the same camera (e.g., a monocular camera, a multi-lens camera, etc.). In other examples, multiple image data may also be acquired with cameras disposed at different locations (e.g., front, rear, left, right, etc.).

In some examples of the present disclosure, the bird's-eye view feature may include the spatial structure and semantic information of the image data from a bird's-eye view. For example, the bird's-eye view feature may be a feature of multi-view image data associated with the three-dimensional point cloud data in a bird's-eye view coordinate system. In some examples of the present disclosure, an attention response may be generated when using a deep learning model such as a CNN or a transformer model to process image data from different viewing angles. This attention response is used to represent the response level of the model in processing different regions of the image data. The bird's-eye view feature (e.g., BEV feature 228 shown in FIG. 2) may be determined based on the attention response. That is, the bird's-eye view feature may be represented in the form of an attention response map. The attention response map refers to the image of the response of the BEV feature under the attention mechanism.

In some examples of the present disclosure, the attention response level is different at different locations and regions of the map. The response levels of different regions are determined according to the statistical values of a plurality of response levels corresponding to a plurality of location points included in the region. For example, the response level in region A may be an average of a plurality of response levels corresponding to a plurality of location points included in region A. It can be understood that a region with a lower level of attention response may represent that there is a higher probability that an object of an unknown category (e.g., an object not labeled in the training data) exists in the region or that there are no objects. A region with a higher level of attention response may represent a higher likelihood that a known object (e.g., an object labeled in the training data) is present in the region.

In some examples of the present disclosure, the three-dimensional object detection model may be any machine learning model that may be used to identify an object. The three-dimensional object detection model can determine the object contained in image data based on bird's-eye view features and use an object prediction box (such as the object prediction box 232 shown in FIG. 2) to frame the location of the object, the object prediction box further comprising category information. The object may be an object of a known category (e.g., an object labeled in the training data).

At block 308, the method 300 comprises adjusting the three-dimensional object detection model based on the object box and the prediction object box. The object box is a filtered object box (e.g., object box 218 shown in FIG. 2), wherein the object contained therein is of an unknown category. The three-dimensional object detection model is adjusted based on the differences between the object box and the prediction object box, such that the adjusted three-dimensional object detection model has the ability to identify objects of unknown categories. In some examples of the present disclosure, adjusting the three-dimensional object detection model refers to fine-tuning a pre-trained three-dimensional object detection model. For example, after a three-dimensional object detection model is trained using a closed training data set, in order to further improve the detection performance of the pre-trained three-dimensional object detection model, the detection results of objects of unknown categories obtained by filtering the detection results of an uncategorized object detection model, i.e., a foreground object detection model, can be used to train the three-dimensional object detection model again. The three-dimensional object detection model can be readjusted (e.g., adjusting the weights of the three-dimensional object detection model) to enable the three-dimensional object detection model to have open world object detection capabilities, because the real world is usually an open data set; i.e., it contains dynamic, changeable, and unpredictable objects of unknown categories. Adjusting may include traversing the training data used to train the three-dimensional object detection model (i.e., sequentially training the three-dimensional object detection model with a plurality of training data) until the adjusted three-dimensional object detection model satisfies the preset requirements. For example, the three-dimensional object detection model may be adjusted according to the difference in location between the object box and the prediction box (e.g., represented by a regression loss function) or the category difference (e.g., represented by a classification loss function). In some examples, satisfying the preset requirements may include that a difference between the three-dimensional location information of the prediction box and the object box is less than a difference threshold.

In this way, other object detection models can filter object boxes of objects of unknown categories, combine object boxes with prediction boxes predicted by the three-dimensional object detection model, and provide strong support for model training, thereby improving the model training efficiency. The three-dimensional object detection model is adjusted according to the differences between the two to improve the model's detection performance for objects of unknown categories. At the same time, since the type of three-dimensional object detection model is not limited in the training process, the generated three-dimensional object detection model also has good scalability and versatility and can be adapted to the detection needs of different scenarios and object categories.

In some examples of the present disclosure, in order to further improve the accuracy of the object box, the object candidate box may be further filtered using the bird's-eye view feature to obtain a final object box. The region indicated by the object candidate box refers to the region where an object may be present and the region with a lower level of attention response refers to the region where unknown objects may be present or an object may not be present. Thus, the object box (e.g., the object box 218 shown in FIG. 2) where an unknown object is present may be filtered by combining both. If the attention response level of the object candidate box in the region corresponding to the bird's-eye view feature is low, this means that there is an unknown object in the region and the object candidate box can be determined as the object box (such as the object box 218 shown in FIG. 2). An object candidate box may be filtered if the object candidate box has a high level of attention response in the region corresponding to the bird's-eye view feature, indicating that a known object may be present at the region.

In some examples, the object candidate box can be determined based on input three-dimensional point cloud data, video, or images using a pre-trained foreground object detection network. The pre-trained foreground object detection network (e.g., the foreground object detection network 206 shown in FIG. 2) is a network for identifying and separating foreground objects (i.e., objects of interest) in video, images, or three-dimensional point cloud data. It is essentially a sliding window-based uncategorized foreground object detection network. For example, three-dimensional point cloud data of any scale is input into a pre-trained foreground object detection network, which outputs a series of cuboid candidate regions. The likelihood of objects (foreground) being present in these cuboid candidate regions is high, and they may serve as object candidate boxes (e.g., object candidate box 212 shown in FIG. 2).

In some examples, the foreground object detection network may be trained based on the difference between the predicted results of the foreground object detection network and the labeling results of the training data. For example, the foreground object detection network may be trained based on differences in geometric size and/or distance of the center point between the object candidate boxes predicted by the foreground object detection network and the labeled box included in the ground truth. In other examples, the confidence (or objectness score) of the object candidate box can also be determined based on the matching result between the predicted object candidate box and the labeled box included in the ground truth, and the foreground object detection network can be trained based on the confidence (or objectness score). The matching result may be determined using the Hungarian algorithm or other algorithm.

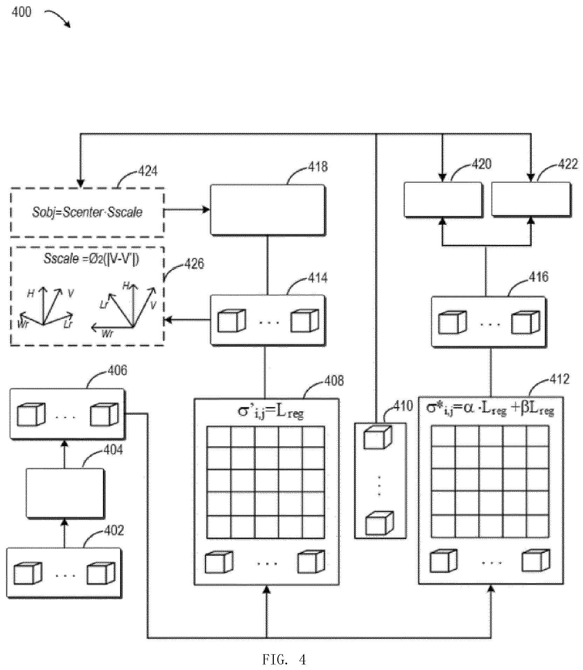

In some examples of the present application, the training of a foreground object detection network (e.g., the foreground object detection network 206 shown in FIG. 2) comprises two branches, one for determining an objectness score and the other for classification and regression. FIG. 4 shows a schematic diagram of a process for training a foreground object detection network according to some examples of the present disclosure. As shown in FIG. 4, the corresponding locations in the training data are labeled with ground truth or accurate labels or data (the locations and categories of the objects are labeled in the training data). The corresponding initial query 402 is determined based on the training data and the three-dimensional object candidate region (or three-dimensional object candidate box) 406 corresponding to the initial query 402 can be determined from the foreground object detection network 404.

As shown in FIG. 4, a matching result between a three-dimensional object candidate box 406 and a ground truth object box 410 included in the ground truth value may be determined using the Hungarian algorithm to determine the first prediction box 414 and the second prediction box 416. At block 408, a matching result between the plurality of three-dimensional object candidate boxes 406 and the plurality of ground truth object boxes 410 (ground truth labeled boxes) may be determined using the Hungarian algorithm combined with geometric consistency constraints. A cost matrix is constructed based on the matching results, where each element represents the matching cost between two boxes. By minimizing the cost matrix's cost function, the best match result can be determined. The first prediction box 414 and the second prediction box 416 may be determined based on the best match.

In some examples of the present disclosure, a portion of the cost function of the cost matrix is the classification loss between the three-dimensional candidate box 406 and the ground truth object box 410, while a further portion is the regression loss of bounding box parameters (such as location, size, and orientation). For example, the cost function may be Equation (1) below:

$$\sigma^* = argmin_{\theta \epsilon p} \sum_{i=1}^{w} -1_{\{c_j \neq \emptyset\}} \hat{p}_{\theta(j)}(c_j) + 1_{\{c_j = \emptyset\}} L_{box}(b_j, \hat{b}_{\theta(j)}) \quad (1)$$

**wherein the** $P$() function represents a permutation set, i.e., all possible ways to match the three-dimensional candidate box 406 to the ground truth object box 410. () is a permutation, i.e., a mapping from the three-dimensional candidate box 406 to the ground truth object box 410. M is the number of objects in the predicted or ground truth object box. represents the category of the object in the $j$th ground truth object box. $_{()}$() represents the probability of predicting the three-dimensional candidate box 406 as category. $-1_{\{\neq\emptyset\}}$ and $1_{\{=\emptyset\}}$ are indicator functions used to distinguish whether an object in the ground truth object box 410 is present (i.e., whether it is labeled). If not empty, the first indicator function is 1 and the second indicator function is 0, indicating that the training data includes the labeling of the ground truth object box. (, $_{()}$) can be a loss function of the bounding box parameters, which is used to characterize the deviation between the three-dimensional candidate box $_{()}$ and the ground truth labeled box.

It can be understood that the cost function described above is designed to balance classification and regression loss. When a corresponding GT object is present, the cost function is concerned with the accuracy of the classification, i.e., $_{()}$() and when the corresponding GT object is not present, the cost function is concerned with the regression loss of the bounding box parameters (, $_{()}$). In some examples of the present disclosure, in order to improve the accuracy and robustness of the foreground object detection network, the cost function may be made to focus only on the matching results in the geometric space to determine the first prediction box 414. As shown in FIG. 4, at block 408, the cost function may be adjusted such that the adjusted cost function focuses only on matching results with the ground truth object box 410 in terms of geometry. The adjusted cost function is shown in Equation (2) below:

$$\sigma' = 1_{\{c_j = \emptyset\}} L_{L1}(b_j, \hat{b}_{\theta(j)}) \quad (2)$$

It will be understood that when empty, there is no corresponding ground truth object box 410 that is identical to the object contained in the three-dimensional candidate box 408. On this basis, only the geometric consistency between the three-dimensional candidate box 406$_{()}$ and the ground truth labeled box may be of interest. By minimizing the cost function, a first prediction box 414 can be determined that closely matches the GT geometrically. Based on the adjusted cost function, the geometric matching result between each three-dimensional object candidate box 406 and the ground truth object box 410 can be determined and the corresponding first prediction box 414 can be determined.

As shown in FIG. 4, at block 424, an objectness score for the first prediction box 414 may be determined based on the first prediction box 414 that is geometrically matched. For example, the objectness score of the first prediction box 414 may be determined based on the difference in geometric dimensions between the first prediction box 414 and the ground truth object box 410. For example, the objectness score of the first prediction box 414 can be determined based on the intersection over union (i.e., IoU) between the first prediction box 414 and the ground truth object box 410, the distance between the center points, and the consistency of size and orientation.

At block 426, a three-dimensional bounding box in ground truth object box 410 and first prediction box 414 may be represented using a vector. For example, = [, 0,0], = [0, , 0], = [0,0, $h$] may be utilized to represent the size of the first prediction box 414, where l, w, and h are the length, width, and height of the prediction object box 414, respectively. In some examples of the present disclosure, a rotating matrix may be utilized to determine a rotated vector as shown in (3) below:

$$R_z(r) = \begin{bmatrix} \cos(r) & -\sin(r) & 0 \\ \sin(r) & \cos(r) & 0 \\ 0 & 0 & 1 \end{bmatrix} \qquad (3)$$

Applying the rotation matrix to *L, W,* and *H*, the rotated vectors *Lr* = *Rz(r)· L, Wr* = *Rz(r)· W* can be obtained. The rotation vector then used to represent the first prediction box 414 is = [, , ]. The rotation vector ' of the ground truth labeled box in the ground truth object box 410 may be determined in the same manner.

In some examples of the present disclosure, the center distance between the center point O of the labeled box corresponding to the ground truth object box 410 and the center point ' of the corresponding first prediction box 414 can be determined using Equation (4) below and the geometric scale difference between the ground truth labeled box in the ground truth object box 410 and the corresponding first prediction box 414 can be determined using Equation (5) below:

$$S_{center} = \phi_1(|O - O'|) \qquad (4)$$

$$S_{scale} = \phi_2(|V - V'|) \qquad (5)$$

In which, $\phi1()$ and $\phi2()$ are Gaussian kernel functions. For example, it can be determined using $e^{\frac{\|x-x'\|^2}{2t^2}}$ , where *t* is the normalization parameter used to control the width of the Gaussian kernel. It can be understood that the center distance between the two can also be determined using other distance equations, and the present disclosure does not limit the method of determining the distance.

It can be understood that after determining the geometric scale difference and the center distance, the objectness score of the first prediction box 414 can be determined with $S_{obj} = \sqrt{S_{scale} \cdot S_{center}}$ . After determining the predicted objectness score and the actual objectness score in the above manner, $\widehat{S_{obj}}$ a loss function of $= (\widehat{S_{obj}})$ can be determined for the objectness score. Based on the loss function, the network layer of the branch in the foreground object detection network 404 for determining the objectness score may be adjusted so that the foreground object detection network 404 is able to obtain a geometrically spatially accurate objectness score for the first prediction box 414.

As shown in FIG. 4, at block 412, a second prediction box 416 that matches both the category information and the location information for the ground truth object box 410 may also be determined based on the Hungarian algorithm. The regression loss ($L_{cls}$) 420 is determined based on the difference between the location information of the second prediction box 416 and the location information of the ground truth labeled box in the ground truth object box 410. The classification loss ($L_{reg}$) 422 is determined based on the difference between the category information of the second prediction box 416 and the category information of the ground truth labeled box in the ground truth object box 410. Based on the regression loss 420 (e.g., the cross entropy loss function) and the classification loss 422 (e.g., the smoothing loss function), the network layers of the branches used for classification and regression in the foreground object detection network 404 can be adjusted so that the location and category of the prediction box predicted by the foreground object detection network 404 are more accurate.

In some examples of the present disclosure, the foreground object detection network 404 final loss function may be represented by Equation (6) below:

$$L_{liDAR} = L_{obj} + L_{reg} + L_{cls} \qquad (6)$$

In some examples of the present disclosure, after obtaining a pre-trained foreground object detection network using the training method of the foreground object detection network described in the above examples, the pre-trained foreground object detection network may be utilized to determine object candidate boxes in three-dimensional point cloud data (predicted candidate boxes, such as object candidate block 212 shown in FIG. 2). In order to ensure that the object contained in the finally determined object box is an object of unknown category, after the object candidate box is determined, the object candidate box can be filtered based on the category information of the known objects contained in the GT. If the object contained in the object candidate box is present in the GT, filter the object candidate box out; if the object contained in the object candidate box is not present in the GT, retain the object candidate box and use it as a second object candidate box (e.g., the second object candidate box 214 shown in FIG. 2).

Based on the training method of the foreground object detection network described in the above example, it can be known that the foreground object detection network will also output the objectness score corresponding to the object candidate box. The objectness score may serve as a first confidence level of the second object candidate box that is filtered to characterize the confidence of the object contained in the second object candidate box. The way in which the foreground object detection network outputs the objectness score is the same as the way the foreground object detection network outputs the objectness score in the training process (e.g., the foreground object detection network 404 training process shown in FIG. 4) and is not described in detail in the present disclosure.

As noted above, the second object candidate boxes may be sorted according to the objectness scores such that the plurality of second object candidate boxes are arranged in a sequential order from high to low. A preset number of second object candidate boxes are selected from among the top-ranked plurality of second object candidate boxes as third object candidate boxes (e.g., the third object candidate box 238 shown in FIG. 2). The preset number can be set by the user based on prior knowledge or experimental results, e.g., it can be set to *k.*

In this way, the pre-trained foreground object detection network can filter the generated object candidate boxes multiple times according to a variety of filtering methods so that the filtered determined object candidate boxes are more accurate; i.e., the objects contained in the filtered determined object candidate boxes are largely objects of unknown categories.

In some examples of the present disclosure, in order to further improve the accuracy of determining object candidate boxes, a three-dimensional object detection model (e.g., the three-dimensional object detection model 104 shown in FIG. 1) may also be incorporated and the intermediate results output from the three-dimensional object detection model may be used to further filter the object candidate boxes. The bird's-eye view features (such as the BEV feature 228 shown in FIG. 2) determined by the three-dimensional object detection model based on multi-perspective image data characterize the attention response level in different regions (the response level can be used to characterize the possibility of the presence of objects of unknown categories to a certain extent). Therefore, the object candidate boxes (e.g., third object candidate box 238 shown in FIG. 2) may be further filtered according to the bird's-eye view features. For example, the second confidence level corresponding to the third object candidate box 238 in the bird's-eye view feature may be determined according to the attention response level. Based on the second confidence level, third object candidate boxes with a second confidence level greater than a preset confidence leveled may be filtered, and third object candidate boxes with a second confidence level less than the preset confidence level may be retained and used as object boxes (e.g., object boxes 218 shown in FIG. 2).

In some examples of the present disclosure, in order to engage more object candidate boxes (e.g., object candidate box 212 shown in FIG. 2) in the filtering process, the object candidate boxes may be reordered using a first confidence level and a second confidence level. For example, the first confidence level and the second confidence level may be fused to determine the confidence levels of different object candidate boxes. The second confidence level may be determined according to the attention response level. For example, the second confidence level may determine using Equation (7) below:

$$s_{att} = \frac{1}{w \times l} \sum_{i=1}^{w} \sum_{j=1}^{l} A(x + i \cdot \cos(r) - j \cdot \sin(r), j + i \cdot \cos(r) + j \cdot \sin(r)) \qquad (\,7\,)$$

where *i* and *j* are indices that traverse the feature map and $A()$ is a function that calculates the attention response level. *w* and *l* are the width and length of the bird's-eye view feature and *r* is the rotation angle.

In some examples of the present disclosure, after determining the second confidence level in the above manner, the confidence level of the object candidate box may be determined using Equation (8) below based on the first confidence level 'and the second confidence level:

$$S_{jcs} = s'_{obj} \cdot (1 - s_{att}) \qquad (\,8\,)$$

It can be understood that after determining the confidence level, the object candidate boxes can be reordered according to the confidence level, and a preset number (e.g., k) of the object candidate boxes ranked first can be reselected as object boxes. Of course, object candidate boxes may also be filtered in other ways to determine which object boxes satisfy the conditions. It can be understood that the present disclosure does not limit how the confidence level is determined.

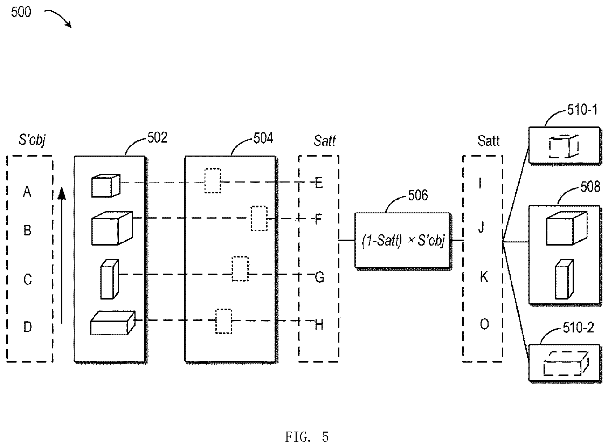

FIG. 5 shows a schematic diagram of a process for determining an object box according to some examples of the present disclosure. As shown in FIG.5, the foreground object detection network can generate first confidence levels ' corresponding to a plurality object candidate boxes based on three-dimensional point cloud data. After determining the plurality of first confidence levels ', the object candidate boxes 502 may be sorted in descending order (e.g., the sorting result is first confidence level A > first confidence level B > first confidence level C > first confidence level D). Based on the location information of the object candidate boxes 502, the region corresponding to the same location in the bird's-eye view feature 504 may be determined. The attention response level corresponding to this region is the second confidence level (e.g., second confidence level E, second confidence level F, second confidence level G, and second confidence level H). The second confidence levels are not sorted here. The module 506 is utilized to determine the confidence levels (e.g., confidence level I, confidence level J, confidence level K, and confidence level O) of the plurality of object candidate boxes based on =' · (1-). In some examples, the top k high-confidence object candidate boxes may be selected from the plurality of object candidate boxes as object boxes 508, and the remaining object candidate boxes are regarded as rejected candidate boxes (e.g., 510-1 and 510-2). In some other examples, an object candidate box having a confidence level greater than a preset threshold may also be determined as an object box based on a comparison of the confidence levels of the plurality of object candidate boxes to a preset threshold.

In some examples of the present disclosure, the attention response map is usually implemented by the attention responses; that is, the attention responses are mapped to the original image to generate a heat map. In this heat map, the darker the color, the greater the attention response of the region; that is, the higher the model's attention to the region.

In some examples of the present disclosure, after obtaining an object box by combining a foreground object detection network and bird's-eye view feature filtering, the three-dimensional object detection model can be further trained based on the difference between the object box and the prediction object box of the three-dimensional object detection model. In the first step of training the three-dimensional object detection model, the training data comprises object instances of known categories. For example, the three-dimensional object detection model may be trained based on a loss function. The loss function may include a classification loss function and a regression loss function of a known category; e.g., the loss function 1 in the first step of training may be determined using Equation (9) below:

$$L1_{camera} = \sum_{N}^{i=1} L_{cls}^{know_i} + L_{reg} \qquad (9)$$

where the classification loss function of the known category is $L_{cls}^{know_i}$ and the regression loss function is.

In the second step of training the three-dimensional object detection model, the training data comprises filtered object boxes including unknown categories. Thus, the loss function in the second step of training may include the classification loss function of known categories, the classification loss function of unknown categories, and the regression loss function. For example, the loss function 2 in the first step of training may be determined using the Equation (10) below:

$$L2_{camera} = \sum_{N}^{i=1} L_{cls}^{know_i} + \omega L_{cls}^{unk} + L_{reg} \qquad (10)$$

**where** $L_{cls}^{unk}$ is the classification loss function of unknown categories and is the weight factor corresponding to the objectness score ' generated using the foreground object detection network.

In some examples of the present disclosure, the three-dimensional object detection model can perform feature extraction on input image data from different perspectives (e.g., using a deep learning network to perform feature extraction), thereby converting the original image data into high-level feature representation for subsequent processing and recognition. The extracted features are converted into BEV features, which simulate the perspective of looking down at the ground from a high altitude. This conversion helps simplify complex relationships in three-dimensional space and makes subsequent processing more efficient. The three-dimensional object detection model can fuse BEV features at different viewing angles (e.g., using a multi-view encoder to fuse BEV features). This step utilizes a transformer and spatial attention mechanism to capture the spatial relationship between different viewing angles. At the same time, a transformer and temporal attention mechanisms are utilized to aggregate historical BEV features to capture temporal dependencies. After obtaining the fused spatial and temporal features, the three-dimensional object detection model can use a predefined grid-like BEV query (e.g., the initial query 224 shown in FIG. 2) to find and fuse the spatial/temporal information. This process is similar to performing a sliding window operation in the feature map to generate an output representation for each query location (e.g., the three-dimensional candidate region 232 shown in FIG. 2).

In some examples of the present disclosure, a three-dimensional object detection model generated using the method described in examples of the present disclosure is compared to conventional three-dimensional object detection models in terms of, e.g., the recall rate of objects of unknown categories, the average recall rate of objects of unknown categories, and the detection accuracy of objects of unknown categories. Based on a large amount of experimental results and test results, it can be seen that the three-dimensional object detection model generated using the method described in examples of the present disclosure has performance superior to the conventional three-dimensional object detection model in terms of detection accuracy and recall rate. That is, the three-dimensional object detection model generated using the method described in examples of the present disclosure performs better in terms of detecting objects of unknown categories and has the ability to detect objects in the open world.

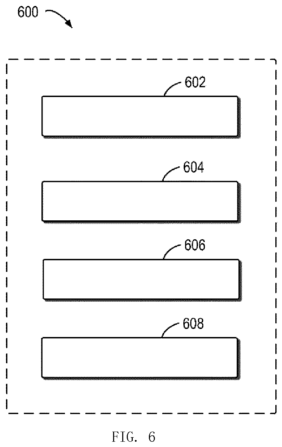

FIG. 6 shows a block diagram of an apparatus 600 for generating a three-dimensional object detection model according to some examples of the present disclosure. The apparatus 600 comprises a first object detection result determination unit 602 configured to determine a first object detection result based on three-dimensional point cloud data using a first object detection model, the first object detection result comprising location information of a first object candidate box. The apparatus 600 further comprises a first object box determination unit 604 configured to determine a first object box from the first object candidate box, wherein the category of objects contained in the first object box is a category unknown to the second object detection model. The apparatus 600 further comprises a second object detection result determination unit 606 configured to determine a second object detection result comprising location information of a second object box and a category of objects contained in the second object box using a second object detection model based on the bird's-eye view features associated with the three-dimensional point cloud data. The apparatus 600 also includes a model adjustment unit 608 configured to adjust the second object detection model based on the second object box and the first object box.

In some examples, the first detection result determination unit 602 is further configured to: determine a first object candidate box set in the three-dimensional point cloud data through a pre-trained foreground object detection network; and the second object detection result determination unit 606 is further configured to: determine a second object detection result based on a bird's-eye view feature using the pre-trained three-dimensional object detection model, wherein the pre-trained data of the pre-trained three-dimensional object detection model does not include objects of unknown categories.

In some examples, the first object box determination unit 604 is further configured to: determine a second object candidate box set based on object information of known categories contained in the three-dimensional point cloud data by filtering the first object candidate boxes that contain objects of known categories in the first object candidate box set; determine a first confidence level corresponding to the second object candidate box in the second object candidate box set, the first confidence level being used to characterize the confidence that an object is contained in the second object candidate box; determine a third object candidate box set based on the first confidence level; and determine a first object box from the third object candidate box set based on the bird's-eye view features associated with the three-dimensional point cloud data.

In some examples, the apparatus 600 further comprises a first confidence determination unit configured to: determine a first confidence level of the second object candidate box based on a matching result between the second object candidate box and a corresponding ground truth object box, the matching result being determined based on a second similarity between the second object candidate box and the ground truth object box.

In some examples, the apparatus 600 further comprises a bird's-eye view feature determination unit configured to: determine a bird's-eye view feature based on the plurality of image data associated with the three-dimensional point cloud data.

In some examples, the first object box determination unit 604 is further configured to: determine a second confidence level of the third object candidate box based on the location information of the third object candidate box included in the third object candidate box set and the bird's-eye view feature at the corresponding location, the second confidence level being used to characterize the confidence that an object of unknown category is contained at the location information; and determine the first object box based on the second confidence level.

In some examples, the apparatus 600 further comprises a second confidence determination unit configured to: determine a second confidence level based on the attention response of the three-dimensional object detection model to the bird's-eye view features of different regions.

In some examples, the object box determination unit 604 is further configured to: determine a first confidence level of the first object candidate box based on the matching result between the first object candidate box and the corresponding ground truth object box; determine a second confidence level of the first object candidate box based on the attention response of the second object detection model to the bird's-eye view features of different regions and the location information of the first object candidate box; and determine the first object box based on the first confidence level and the second confidence level.

In some examples, the bird's-eye view feature is determined according to a plurality of image data at a plurality of viewing angles, and the plurality of image data is image data collected in the same environment and at the same time for the three-dimensional point cloud data.

It will be understood that the apparatus 600 of the present disclosure may achieve at least one of a number of advantages that the method or process described above can achieve.

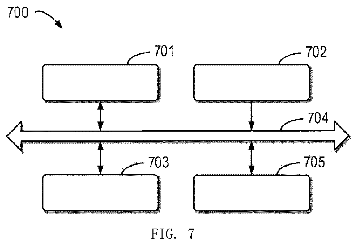

FIG. 7 illustrates a schematic block diagram of an exemplary device 700 suitable for implementing the examples of the present disclosure. The above-mentioned controller can be implemented using the device 700. As shown in the figure, the device 700 comprises a processor 701, which can execute various appropriate actions and processes according to computer program instructions stored in a read-only memory (ROM) 702 and loaded into a random access memory (RAM) 703. Various programs and data required for the operation of the device 700 may also be stored in the RAM 703. The processor 701, the ROM 702, and the RAM 703 are interconnected through a bus 704. An input/output (I/O) interface 705 is also connected to the bus 704.

The various processes and processing described above, such as the method 300, may be executed by the processor 701. For example, in some examples, the method 300 can be implemented as a computer software program tangibly contained in a computer-readable medium. In some examples, portions or all of the computer program can be loaded and/or installed onto device 700 via ROM 702. When the computer program is loaded onto the RAM 703 and executed by the processor 701, one or more actions of the method 300 described above may be performed.

The present disclosure may be a method, apparatus, system, and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, or a mechanical coder, such as a punch card with instructions or structures with protrusions in grooves or indentations, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to perform the operations of the present disclosure may be assembly instructions, instruction set architecture (ISA) instructions, computer instructions, computer-related instructions, microcode, firmware instructions, state set data, or source code or object code written with any combination of one or more programming languages. The programming language includes object-oriented programming languages such as Smalltalk,

C++, and conventional procedural programming languages such as "C" languages and similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers, or the processing units of other programmable data processing apparatuses, thereby producing a type of computer, such that when these instructions are executed by the computers or processing units of other programmable data processing apparatuses, an apparatus that realizes the functions/actions stipulated in one or more boxes in the flow charts and/or block diagrams is produced. These computer-readable program instructions may also be stored in computer-readable storage medium, enabling computers, programmable data processing apparatuses, and/or other devices to operate in a specific manner. Therefore, the computer-readable media containing instructions comprise a manufactured product that comprises instructions for implementing various aspects of the functions/actions specified in one or more boxes in the flow charts and/or block diagrams.

The computer-readable program instructions may also be loaded onto a computer, other programmable data processing apparatuses, or other devices, enabling a series of operational steps to be executed on the computer, other programmable data processing apparatuses, or other devices to generate a computer-implemented process. This enables the instructions executed on the computer, other programmable data processing apparatuses, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section, or instructions, wherein the part of the module, program section, or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples, the technological improvements in the technology in the market, or allow others of ordinary skill in the art to understand the various embodiments disclosed in this text.

Although the subject matter has been described in language specific to structural features and/or methodological acts, it is to be understood that the subject matter defined in the appended Claims is not necessarily limited to the specific features or acts described above. Rather, the specific features and operations described above are merely exemplary forms of implementing the Claims.

## Claims

1. A method (300) for adjusting an object detection model, comprising:

    determining (302) a first object detection result based on three-dimensional point cloud data using a first object detection model, the first object detection result comprising location information of a first object candidate box;
    determining (304) a first object box from the first object candidate box, wherein the category of objects contained in the first object box is a category unknown to the second object detection model;
    determining (306) a second object detection result comprising location information of a second object box and a category of objects contained in the second object box using the second object detection model based on the bird's-eye view features associated with the three-dimensional point cloud data; and
    adjusting (308) the second object detection model based on the second object box and the first object box.

2. The method (300) according to Claim 1, wherein determining (302) the first object test result comprises:

    determining a first object candidate box set in the three-dimensional point cloud data through a pre-trained foreground object detection network; and
    determining (306) the second object test result comprises:
    determining the second object detection result based on the bird's-eye view feature using the pre-trained three-dimensional object detection model, wherein the pre-trained data of the pre-trained three-dimensional object detection model does not include objects of unknown categories.

3. The method (300) according to Claim 2, wherein determining (304) the first object box from the first object candidate box comprises:

determining a second object candidate box set based on object information of known categories contained in the three-dimensional point cloud data by filtering the first object candidate boxes that contain objects of known categories in the first object candidate box set;

determining a first confidence level corresponding to the second object candidate box in the second object candidate box set, the first confidence level being used to characterize the confidence that an object is contained in the second object candidate box;

determining a third object candidate box set based on the first confidence level;

and determining a first object box from the third object candidate box set based on the bird's-eye view features associated with the three-dimensional point cloud data.

4. The method (300) according to Claim 3, wherein determining a first confidence level corresponding to a second object candidate box in the second object candidate box set comprises:

determining the first confidence level of the second object candidate box based on a matching result between the second object candidate box and a corresponding ground truth object box, the matching result being determined based on the similarity between the second object candidate box and the ground truth object box.

5. The method (300) according to Claim 1, further comprising:

determining the bird's-eye view feature based on the plurality of image data associated with the three-dimensional point cloud data.

6. The method (300) according to Claim 3, wherein determining (304) the first object box from the third object candidate box set comprises:

determine a second confidence level of the third object candidate box based on the location information of the third object candidate box included in the third object candidate box set and the bird's-eye view feature at the corresponding location, the second confidence level being used to characterize the confidence that an object of unknown category is contained at the location information; and

determining the first object box based on the second confidence level.

7. The method (300) according to Claim 6, further comprising:

Determine the second confidence level based on the attention response of the three-dimensional object detection model to the bird's-eye view features of different regions.

8. The method (300) according to Claim 1, wherein determining (304) the first object box from the first object candidate box comprises:

determining a first confidence level of the first object candidate box based on the matching result between the first object candidate box and the corresponding ground truth object box;

determining a second confidence level of the first object candidate box based on the attention response of the second object detection model to the bird's-eye view features of different regions and the location information of the first object candidate box; and

determining the first object box based on the first confidence level and the second confidence level.

9. The method (300) according to Claim 1, wherein the bird's-eye view feature is determined according to a plurality of image data at a plurality of viewing angles, and the plurality of image data is image data collected in the same environment and at the same time for the three-dimensional point cloud data.

10. An apparatus (600) for adjusting an object detection model, comprising:

a first object detection result determination unit (602) configured to determine a first object detection result based on three-dimensional point cloud data using a first object detection model, the first object detection result comprising location information of a first object candidate box;

a first object box determination unit (604) configured to determine a first object box from the first object candidate box, wherein the category of objects contained in the first object box is a category unknown to the second object detection model; and

a second object detection result determination unit (606) configured to determine the second object detection result comprising location information of a second object box and a category of objects contained in the second object box using the second object detection model based on the bird's-eye view features associated with the three-dimensional point cloud data; and
a model adjustment unit (608) configured to adjust the second object detection model based on the second object box and the first object box.

11. An electronic device (700), comprising:

at least one processor (701); and
a memory (702) coupled to the at least one processor (701) and having instructions stored thereon, the instructions, when executed by the at least one processor (701), causing the electronic device (700) to perform the method according to any one of Claims 1-9.

12. A computer program product, the computer program product being tangibly stored on a computer-readable medium and comprising computer-executable instructions, the computer-executable instructions, when executed, implementing the method according to any one of Claims 1 to 9.

100

118

108

110

102

112

104

114

106

116

FIG. 1

FIG. 2

300

302

304

306

308

FIG. 3

400

$S_{obj} = S_{center} \cdot S_{scale}$   424   418   420   422

$S_{scale} = \emptyset_2(|V-V'|)$   426

414   416

406

$\sigma'_{i,j} = L_{reg}$   408

404

410   $\sigma^*_{i,j} = \alpha \cdot L_{reg} + \beta L_{reg}$   412

402

FIG. 4

500

S'obj

502

504

Satt

Satt

510-1

A

E

I

506

508

B

F

J

$(1-Satt) \times S'obj$

C

G

K

D

H

O

510-2

FIG. 5

600

602

604

606

608

FIG. 6

FIG. 7

Europäisches
Patentamt
European
Patent Office
Office européen
des brevets

# EUROPEAN SEARCH REPORT

**Application Number**

EP 25 19 2056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHUOLIN HE ET AL: "Towards Open-set Camera 3D Object Detection", ARXIV.ORG, CORNELL UNIVERSITY LIBRARY, 201 OLIN LIBRARY CORNELL UNIVERSITY ITHACA, NY 14853, 25 June 2024 (2024-06-25), XP091800226, * the whole document * | 1-12 | INV. G06V20/64 G06V20/58 G06V10/82 |
| A | KUAN-CHIH HUANG ET AL: "Weakly Supervised 3D Object Detection via Multi-Level Visual Guidance", ARXIV.ORG, CORNELL UNIVERSITY LIBRARY, 201 OLIN LIBRARY CORNELL UNIVERSITY ITHACA, NY 14853, 23 April 2024 (2024-04-23), XP091734981, * the whole document * | 1-12 | |

**TECHNICAL FIELDS SEARCHED (IPC)**

G06V

The present search report has been drawn up for all claims

| Place of search | Date of completion of the search | Examiner |
|---|---|---|
| The Hague | 30 September 2025 | Ionescu, Tudor |

EPO FORM 1503 03.82 (P04C01)